# EUROPÄISCHE PATENTSCHRIFT

(11) **EP 3 796 117 B1**
(45) Veröffentlichungstag und Bekanntmachung des Hinweises auf die Patenterteilung: **27.10.2021**
(21) Anmeldenummer: 19198052.3
(22) Anmeldetag: 18.09.2019
(51) Int. Cl.: G05B 23/02

(54) **DIAGNOSEVERFAHREN UND DIAGNOSESYSTEM FÜR EINE VERFAHRENSTECHNISCHE ANLAGE**
DIAGNOSTIC METHOD AND DIAGNOSTIC SYSTEM FOR A TECHNICAL INSTALLATION
PROCÉDÉ DE DIAGNOSTIC ET SYSTÈME DE DIAGNOSTIC POUR UNE INSTALLATION TECHNIQUE INDUSTRIELLE

(43) Veröffentlichungstag der Anmeldung: 24.03.2021
(73) Patentinhaber: Siemens Aktiengesellschaft, 80333 München (DE)
(72) Erfinder: Bierweiler, Thomas, 76131 Karlsruhe (DE); Labisch, Daniel, 76149 Karlsruhe (DE); Zufall, Nils, 38678 Clausthal (DE)

(56) Entgegenhaltungen:
- EP-A1- 1 178 380
- US-A1- 2012 041 575
- US-A1- 2013 024 172
- US-A1- 2013 332 773
- US-A1- 2017 083 016

## Beschreibung

Die vorliegende Erfindung betrifft ein Diagnoseverfahren und ein Diagnosesystem für eine verfahrenstechnische Anlage sowie ein Trainingsverfahren für ein solches Diagnosesystem.

Verfahrenstechnische Anlagen wie etwa Raffinerien oder Fabriken, in denen z. B. Stoffe hinsichtlich Zusammensetzung, Art oder Eigenschaft verändert werden, können äußerst komplexe Strukturen aufweisen. Eine Anlage kann sich beispielsweise aus einer Vielzahl, gegebenenfalls miteinander vernetzter und/oder voneinander abhängiger, Komponenten, wie etwa Ventilen, Sensoren, Aktuatoren und/oder dergleichen, zusammensetzen. Solche Anlagen werden in der Regel durch spezielle, insbesondere computerbasierte oder zumindest computergestützte, Prozessleitsysteme geführt, welche dabei insbesondere die verfahrenstechnischen Zusammenhänge zwischen den verschiedenen Komponenten berücksichtigen können. Solche Prozessleitsysteme umfassen die Automatisierungstechnik, insbesondere Automatisierungsprogramme und Bedien- und Beobachtungsprogramme.

Ein Prozessleitsystem kann üblicherweise ein Großteil von Randbedingungen, unter denen der Prozess stattfinden soll, vorgeben, zum Beispiel durch Stellgrößen oder Parameterwerte. Daneben gibt es aber auch Randbedingungen, die vom Prozessleitsystem nicht beeinflussbar, gegebenenfalls sogar unbekannt, sind. Vor dem Hintergrund der erwähnten hochkomplexen Struktur kann es daher schwierig oder zumindest sehr aufwändig sein, den tatsächlichen Betriebszustand der Anlage zuverlässig vorherzusagen.

Um dem entgegenzuwirken, ist es grundsätzlich bekannt, den aktuellen Anlagenzustand zu klassieren. Der Anlage kann so ein Normalbetrieb oder einer von verschiedenen Fehlbetrieben, d. h. eine Abweichung vom Normalbetrieb, zugeordnet werden. Falls ein Fehlbetrieb vorliegt, kann versucht werden, die Anlage wieder in den Normalbetrieb zu überführen. Problematisch kann dabei sein, dass die Erkennung eines Fehlbetriebs möglicherweise zu spät kommt, um Qualitätseinbußen oder sogar Produktionsausfälle zu verhindern.

Ein derartiges Diagnoseverfahren wird in US 2012/041575 A1 offenbart.

Es ist eine Aufgabe der vorliegenden Erfindung, die Diagnose einer verfahrenstechnischen Anlage zu verbessern, insbesondere die Entwicklung zu einem Fehlbetrieb hin frühzeitig zu erkennen.

Die Aufgabe wird gelöst von einem Diagnoseverfahren und einem Diagnosesystem für eine verfahrenstechnische Anlage sowie einem Trainingsverfahren für solch ein Diagnosesystem gemäß den unabhängigen Ansprüchen.

Ein erster Aspekt der Erfindung betrifft ein Diagnoseverfahren für eine verfahrenstechnische Anlage, aufweisend die Schritte: (i) Bereitstellen eines zeitlichen Verlaufs von Anlagendaten, welche den Anlagenzustand zumindest teilweise charakterisieren; (ii) Klassieren eines Anlagenzustands mithilfe von wenigstens zwei Modellen auf Grundlage des zeitlichen Verlaufs der Anlagendaten, wobei sich die Modelle bezüglich eines Zeitfensters, aus dem die Anlagendaten zugrunde gelegt werden, unterscheiden; (iii) Zuordnen jeweils einer Konfidenz zu den Klassierungen, die sich aus den wenigstens zwei Modellen ergeben; und (vi) Ausgeben einer Diagnoseinformation, die auf den Klassierungen des Anlagenzustands und den ihnen zugeordneten Konfidenzen basiert.

Anlagendaten im Sinne der Erfindung sind insbesondere Messgrößen und/oder Stellgrößen. Messgrößen, wie zum Beispiel Temperatur oder Druck in der Anlage oder einer Anlagenkomponente, können etwa durch entsprechende Sensoren erfasst werden. Stellgrößen, wie zum Beispiel eine Ventilstellung oder eine Motorleistung, können zum Beispiel durch ein Prozessleitsystem bzw. einen Anlagenbenutzer vorgegeben sein.

Ein zeitlicher Verlauf von Anlagendaten im Sinne der Erfindung ist insbesondere eine zeitliche Abfolge der Anlagendaten bzw. die Entwicklung der Anlagendaten über einen vorgegebenen Zeitraum hinweg. Ein zeitlicher Verlauf von Anlagendaten kann z. B. in Form einer Datenmenge bereitgestellt werden, welche die Anlagendaten über den vorgegebenen Zeitraum bzw. ein Zeitintervall enthält. Eine solche Datenmenge kann beispielsweise alle erfassten bzw. vorgegebenen Mess- und/oder Stellgrößen über 10 Sekunden enthalten.

Eine Konfidenz im Sinne der Erfindung ist insbesondere ein Maß für das Vertrauen, dass einer Klassifikation entgegengebracht wird. Eine Konfidenz kann zum Beispiel eine, insbesondere statistisch ermittelte, Wahrscheinlichkeit sein, mit der eine Klassifikation zutrifft. Eine Konfidenz kann insbesondere angeben, wie zuverlässig das Modell ist, gemäß dem die Klassierung vorgenommen wurde.

Ein Aspekt der Erfindung basiert auf dem Ansatz, wenigstens zwei Modelle zur Klassierung eines Anlagenzustands einer verfahrenstechnischen Anlage zu verwenden und den Klassierungen eine Konfidenz, welche z. B. eine Zuverlässigkeit der Klassierung angibt, zuzuordnen. Die Modelle unterscheiden sich dabei zumindest darin, dass sie Anlagendaten, welche den Anlagenzustand zumindest teilweise charakterisieren, aus unterschiedlichen Zeitfenstern als Eingangsgröße verarbeiten. Die Zeitfenster beleuchten dabei vorzugsweise unterschiedliche zeitliche Abschnitte aus einem bereitgestellten zeitlichen Verlauf der Anlagendaten. Durch die unterschiedlichen Zeitfenster können bei der Diagnose der Anlage bezüglich des Anlagenzustands entsprechend unterschiedliche Schwerpunkte gesetzt sein bzw. werden, wobei für jeden Schwerpunkt über die zugeordnete Konfidenz die Verlässlichkeit der Diagnose gegeben sein kann. Dabei ist es möglich und gegebenenfalls sogar vorteilhaft, dass sich die Zeitfenster zumindest teilweise überlappen. Zum Beispiel können unterschiedliche Systemdynamiken mit unterschiedlichen, sich überlappenden Zeitfenstern erfassbar sein. Es wird somit eine tiefgreifende, durch die Wahl der unterschiedlichen Zeitfenster flexible und besonders detaillierte Diagnose der Anlage möglich.

Der zeitliche Verlauf der Anlagendaten kann zur Auswertung, insbesondere während des Betriebs der Anlage, zwischengespeichert werden, z. B. in einer Speichervorrichtung. Die Anlagendaten können somit als historische Anlagendaten aufgefasst werden, durch deren Auswertung mithilfe der wenigstens zwei Modelle Informationen bezüglich des aktuellen Anlagenzustands gewonnen werden können.

Der zeitliche Verlauf von Anlagendaten kann dabei vorausschauend, d. h. ab einem definierten Startzeitpunkt, ausgewertet werden, vorzugsweise bei diskontinuierlichen Produktionsverfahren wie Batch- bzw. Chargenprozessen. Der Startzeitpunkt kann dabei in der Vergangenheit liegen. Ab dem Startzeitpunkt, der in bevorzugter Weise mit dem Beginn des Prozesses korrespondiert, können Anlagendaten aus Zeitfenstern unterschiedlicher Länge und/oder unterschiedlicher zeitlicher Auflösung den wenigstens zwei Modellen zur, insbesondere sukzessiven, Klassierung des Anlagenzustands zugrunde gelegt werden.

Alternativ kann der zeitliche Verlauf von Anlagendaten rückschauend, d. h. bis zu einem definierten Endzeitpunkt, ausgewertet werden, vorzugsweise bei kontinuierlichen Produktionsverfahren. Der Endzeitpunkt korrespondiert hierbei in bevorzugter Weise mit der Gegenwart. Die Zeitfenster erstrecken sich vorzugsweise alle bis zum Endzeitpunkt.

Beim Auswerten der Anlagendaten aus dem zeitlichen Verlauf innerhalb der Zeitfenster verwenden die wenigstens zwei Modelle vorzugsweise alle verfügbaren, zumindest aber einen Teil der Mess- und Stellgrößen, die innerhalb des entsprechenden Zeitfensters aufgezeichnet wurden oder werden. Mit anderen Worten sind die hier verwendeten Modelle dazu eingerichtet, durch die Zeitfenster definierte Zeitreihen zu verarbeiten. Darin unterscheiden sich die hier verwendeten Modelle von reinen Modellierungen der Anlage bzw. der ablaufenden Prozesse, welche den Anlagenzustand voraussagen. Solche Modellierungen stützen sich üblicherweise auf einen Parametersatz als Eingabegrößen, also zum Beispiel alle Stell- und Messgrößen zu einem festen Zeitpunkt (etwa der Gegenwart). Eine Klassierung mithilfe einer solchen Modellierung kann aber nur durch ein separates bzw. unabhängiges, statisches Klassierungsverfahren folgen, welches auf den vorhergesagten Anlagenzustand angewandt wird. Im Gegensatz dazu kann im vorliegenden Fall die Klassierung durch die Modelle selbst erfolgen. Dies erlaubt auch die zuverlässige Zuordnung einer Konfidenz.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform unterscheiden sich die Zeitfenster bezüglich ihrer zeitlichen Länge. Dadurch kann, insbesondere bei vorrausschauender Auswertung des zeitlichen Verlaufs von Anlagendaten, eine erste Klassierung bereits frühzeitig vorliegen, während weitere, gegebenenfalls präzisere bzw. zuverlässigere, Klassierungen erst darauffolgend verfügbar werden. Aber auch bei rückschauender Auswertung des zeitlichen Verlaufs von Anlagendaten kann, zum Beispiel aufgrund von Rechenzeitvorteilen, die Klassierung auf Grundlage von Anlagendaten aus einem kürzeren Zeitfenster früher vorliegen. Dies ermöglicht es im Falle eines Fehlbetriebs, bereits frühzeitig mit entsprechenden Schutz- oder auch als "Therapie" bezeichneten Gegenmaßnahmen zu reagieren.

Die Zeitfenster erstrecken sich dabei vorzugsweise alle vom Startzeitpunkt, insbesondere vom Beginn des bereitgestellten zeitlichen Verlaufs, aus. Alternativ können sich die Zeitfenster auch alle bis zum Endzeitpunkt, insbesondere bis zum Ende des bereitgestellten zeitlichen Verlaufs, erstrecken. Für die zeitlichen Bereiche am Beginn bzw. am Ende des bereitgestellten zeitlichen Verlaufs kann sich entsprechend ein starker zeitlicher Überlapp ergeben. Die, insbesondere sukzessive, Auswertung der Anlagendaten aus den Zeitfenstern ermöglicht eine frühzeitige Klassierung und kann sich dabei gleichzeitig, mit zunehmender zeitlicher Länge der Zeitfenster, auf eine zunehmend bessere Informationslage stützen und somit eine gesteigerte Konfidenz in Bezug auf die korrekte Klassierung durch entsprechend längere Zeitreihen erreichen.

In einer weiteren bevorzugten Ausführungsform sind die zeitlichen Längen der Zeitfenster logarithmisch verteilt. Mit anderen Worten weisen die Zeitfenster zeitliche Längen auf, die von einer logarithmischen Funktion abhängen bzw. durch eine logarithmische Funktion definiert sind. Dies kann insbesondere bevorzugt sein, wenn der Anlagenzustand auf Grundlage von Anlagendaten aus Zeitfenstern mit signifikant unterschiedlichen zeitlichen Längen klassiert wird, d. h. einerseits sehr kurze Zeitfenster und andererseits sehr lange Zeitfenster betrachtet werden. Die logarithmische Verteilung der Zeitfenster ermöglicht es dabei, die Anzahl der verwendeten Modelle zu reduzieren, wodurch Rechenzeit gespart werden kann. Dies ist besonders vorteilhaft im Hinblick auf eine Echtzeitanwendung des Diagnoseverfahrens.

In einer weiteren bevorzugten Ausführungsform unterscheiden sich die Zeitfenster bezüglich einer Metrik. Beispielsweise können unterschiedliche Zeitfenster Zeitreihen definieren, in denen die Anlagendaten jeweils unterschiedliche zeitliche Abstände aufweisen. Mit anderen Worten kann z. B. die zeitliche Auflösung in unterschiedlichen Zeitfenstern unterschiedlich sein. Dadurch ist es möglich, unterschiedliche Systemdynamiken besonders effektiv zu analysieren und den Anlagenzustand entsprechend zuverlässig zu klassieren. Zudem kann über eine unterschiedliche Metrik gegebenenfalls auch die zur Klassierung bzw. zur Verarbeitung der entsprechenden Zeitreihe benötigte Rechenkapazität verringert werden.

In einer weiteren bevorzugten Ausführungsform weist wenigstens eines der Zeitfenster eine logarithmische Metrik auf. Insbesondere kann die durch das Zeitfenster definierte Zeitreihen logarithmisch verlaufen, d. h. die zeitlichen Abstände zwischen den Anlagendaten können im Verlauf der Zeitreihe logarithmisch zunehmen. So kann, z. B. bei vorausschauender Auswertung der Anlagendaten zu Beginn bzw. bei rückschauender Auswertung der Anlagendaten zum Ende hin, eine engmaschigere Auswertung bzw. Analyse der Anlagendaten vorgenommen werden. Dadurch können auch in langen Zeitreihen schnelle Dynamiken berücksichtigt werden, insbesondere ohne die benötigte Rechenkapazität signifikant zu erhöhen.

In einer weiteren bevorzugten Ausführungsform werden zeitlich logarithmisch beabstandete Anlagendaten als zeitlicher Verlauf bereitgestellt. Insbesondere können die zeitlichen Abstände zwischen den Anlagendaten innerhalb des bereitgestellten zeitlichen Verlaufs logarithmisch zu- oder abnehmen. Dies ermöglicht eine schnelle Verarbeitung der Anlagendaten auch bei langen Zeitfenstern, insbesondere solchen ohne logarithmische Metrik.

In einer weiteren bevorzugten Ausführungsform wird ein den Anlagenzustand betreffendes Eingangssignal erfasst und einer Anpassung der Konfidenzen zugrunde gelegt. Bei dem Eingangssignal handelt es sich vorzugsweise um eine Benutzereingabe, zum Beispiel eines Anlagenbenutzers. Alternativ kann das Eingangssignal aber auch ein Ausgangssignal eines anderen Überwachungssystems sein. Das Eingangssignal repräsentiert in bevorzugter Weise eine korrekte bzw. wahre Klassierung des Anlagenzustands. Zur Anpassung der Konfidenzen kann das Eingangssignal beispielsweise mit zumindest einer der Klassierungen verglichen werden. Stimmt das Eingangssignal mit der Klassierung überein, kann die entsprechende Konfidenz erhöht werden. Stimmt das Eingangssignal dagegen nicht mit der Klassierung überein, kann die entsprechende Konfidenz verringert werden. Dies erlaubt eine kontinuierliche Erhöhung des Vertrauens in das Diagnosesystem.

In einer weiteren bevorzugten Ausführungsform wird ein den Anlagenzustand betreffendes Eingangssignal erfasst und einer Anpassung von zumindest einem der wenigstens zwei Modelle zugrunde gelegt. Bei dem Eingangssignal handelt es sich vorzugsweise um eine Benutzereingabe, zum Beispiel eines Anlagenbenutzers. Alternativ kann das Eingangssignal aber auch ein Ausgangssignal eines anderen Überwachungssystems sein. Das Eingangssignal repräsentiert in bevorzugter Weise eine korrekte bzw. wahre Klassierung des Anlagenzustands. Zur Anpassung der Modelle kann das Eingangssignal beispielsweise mit zumindest einer der Klassierungen verglichen werden. Stimmt die durch das Eingangssignal repräsentierte Klassierung nicht mit der Klassierung durch das entsprechende Modell überein oder weicht zumindest signifikant davon ab, kann das Modell angepasst werden. Dies erlaubt eine kontinuierliche Erhöhung der Zuverlässigkeit des Diagnosesystems.

In einer weiteren bevorzugten Ausführungsform wird auf Grundlage von wenigstens einer Klassierung eine Zustandsanalyse der technischen Anlage vorgenommen. Die Zustandsanalyse kann dabei durch einen Anlagenbenutzer oder ein anderes Überwachungssystem vorgenommen werden und insbesondere eine Klassierung des Anlagenzustands umfassen. Im Rahmen der Zustandsanalyse kann der Anlagenbenutzer eine Benutzereingabe machen oder das andere Überwachungssystem ein Ausgangssignal erzeugen, welches die korrekte bzw. wahre Klassierung des Anlagenzustands repräsentiert.

Die Klassierung, auf deren Grundlage die Zustandsanalyse vorgenommen wird, kann insbesondere mit einem bislang unbekannten, d. h. in der Vergangenheit nicht aufgetretenen, Fehlbetrieb der Anlage korrespondieren. Vorzugsweise wird in diesem Fall wenigstens eines der Modelle und/oder der Konfidenzen angepasst, insbesondere erweitert. Dadurch kann die Diagnose der Anlage kontinuierlich verbessert werden.

In einer weiteren bevorzugten Ausführungsform umfasst die Diagnoseinformation eine Gesamtklassierung des Anlagenzustands, wobei die Gesamtklassierung auf Grundlage der Klassierungen, die sich aus den wenigstens zwei Modellen ergeben, und den ihnen zugeordneten Konfidenzen ermittelt wird. Insbesondere kann die Gesamtklassierung derjenigen gegenwärtig verfügbaren Klassierung entsprechen, welche auf Grundlage von Anlagendaten aus dem zeitlich längsten Zeitfenster ermittelt wurde. Alternativ kann die gesamte Klassierung aber auch derjenigen gegenwärtig verfügbaren Klassierung entsprechen, welcher die höchste Konfidenz zugeordnet ist. In einer weiteren Alternative kann die Gesamtklassierung auch aus einer statistischen Auswertung mehrerer Klassierungen und der ihnen zugeordneten Konfidenzen ermittelt werden. Die Ausgabe einer Gesamtklassierung kann aufgrund ihrer Eindeutigkeit den Benutzerkomfort erhöhen bzw. die Steuerung der Anlage erleichtern.

In einer weiteren bevorzugten Ausführungsform wird die Gesamtklassierung in Abhängigkeit einer Sequenz aus Klassierungen ermittelt. Dabei ist vorzugsweise eine Reihenfolge vordefiniert, in welcher die resultierenden Klassierungen zur Ermittlung der Gesamtklassierung ausgewertet werden. Beispielsweise können die Klassierungen nach steigender zeitlicher Länge des Zeitfensters, aus dem Anlagendaten dem entsprechenden Modell zugrunde gelegt werden, geordnet sein, woraus sich die Sequenz aus Klassierungen ergibt.

In einem Beispiel kann eine erste kurze Zeitreihe als zu einem Normalbetrieb N gehörig klassifiziert werden, während eine zweite und dritte längere Zeitreihe jeweils als zu einem Fehlbetrieb F gehörig klassifiziert werden können. Der sich ergebenden Sequenz NFF ist vorzugsweise eine Gesamtklassierung zugeordnet, zum Beispiel Fehlbetrieb F. Einer anderen sich ergebenden Sequenz, etwa NFN oder NNF, kann eine andere Gesamtklassierung zugeordnet sein, zum Beispiel Normalbetrieb N. Die Ermittlung der Gesamtklassierung in Abhängigkeit der Sequenz aus Klassierungen, insbesondere auf Grundlage einer vordefinierten Zuordnung unterschiedlicher Sequenzen zu wenigstens einer Klasse, hat dabei den Vorteil, der Gesamtklassierung zum Beispiel im Rahmen eines Trainingsverfahrens ermittelte bedingte Konfidenzen zuordnen zu können. Solche bedingten Konfidenzen können beispielsweise eine Kombination von Wahrscheinlichkeiten, insbesondere bedingte Wahrscheinlichkeiten, mit denen die einzelnen Klassierungen aus der Sequenz die korrekte bzw. wahre Klassierung abbilden, angeben. Die derart ermittelte Gesamtklassierung kann daher besonders zuverlässig sein.

Ein zweiter Aspekt der Erfindung betrifft ein Diagnosesystem für eine verfahrenstechnische Anlage, das zur Ausführung eines Diagnoseverfahrens gemäß dem ersten Aspekt der Erfindung eingerichtet ist und eine Speichereinrichtung aufweist, in der die wenigstens zwei Modelle und die den Klassierungen zuzuordnenden Konfidenzen zur Verwendung im Verfahren gespeichert sind. Ein solches Diagnosesystem ermöglicht die Überwachung einer verfahrenstechnischen Anlage, insbesondere eines Leitsystems der verfahrenstechnischen Anlage, insbesondere in Echtzeit.

Ein dritter Aspekt der Erfindung betrifft ein Trainingsverfahren für ein Diagnosesystem gemäß dem zweiten Aspekt der Erfindung, wobei die wenigstens zwei Modelle durch maschinelles Lernen ermittelt werden. Dem maschinellen Lernen werden dabei vorzugsweise die Anlagendaten einer ersten Menge mehrerer zeitlicher Verläufe aus wenigstens zwei unterschiedlichen Zeitfenstern sowie Information bezüglich der mit den mehreren zeitlichen Verläufen korrespondierenden Anlagenzustände zugrunde gelegt. Die Anlagendaten der ersten Menge mehrerer zeitlicher Verläufe sind dabei in bevorzugter Weise historische Anlagendaten und korrespondieren mit unterschiedlichen Anlagenzuständen, insbesondere dem Normalbetrieb und definierten Abweichungen. Dem maschinellen Lernen können z. B. korrekte bzw. wahre Klassierungen dieser Anlagenzustände zugrunde gelegt werden. Mithilfe des maschinellen Lernens können so zum Beispiel Muster in den durch die unterschiedlichen Zeitfenster definierten Zeitreihen aus zeitlichen Verläufen, die alle mit demselben Anlagenzustand korrespondieren, gefunden und zur Modellbildung herangezogen werden.

In einer bevorzugten Ausführungsform werden die Konfidenzen auf Grundlage einer statistischen Auswertung der Klassierungen ermittelt, die sich aus den wenigstens zwei Modellen für Anlagendaten aus einer zweiten Menge mehrerer zeitlicher Verläufe ergeben. Beispielsweise kann für jedes der Modelle die Anzahl von sich aus der Anwendung des entsprechenden Modells ergebenden Klassierungen erfasst und mit der Anzahl der Fälle, in denen die Klassierung durch das Modell mit der zugrunde gelegten korrekten bzw. wahren Klassierung übereinstimmt, verglichen werden, insbesondere ins Verhältnis gesetzt werden. Mit anderen Worten kann ein Datensatz, etwa in Form eines Histogramms, erzeugt werden, aus dem für jedes der Modelle die Anzahl an korrekten Klassierungen und/oder die Anzahl an falschen Klassierungen hervorgeht. Beim Verarbeiten von Anlagendaten aus weiteren zeitlichen Verläufen der zweiten Menge, insbesondere aber auch beim Verarbeiten von Anlagendaten aus dem zeitlichen Verlauf im realen Betrieb der Anlage, d. h. beim Durchführen des Diagnoseverfahrens gemäß dem ersten Aspekt der Erfindung, kann der Datensatz entsprechend aktualisiert, d. h. das Auftreten von falschen bzw. richtigen Klassierungen hochgezählt, werden. Die Verarbeitung einer steigenden Datenmenge ermöglicht somit eine Verbesserung der Zuverlässigkeit der ermittelten Konfidenz.

Dabei ist es auch möglich, dass im Datensatz Sequenzen von sich aus den wenigstens zwei Modellen ergebenden Klassierungen gespeichert und das Auftreten dieser Sequenzen gezählt wird. Dies kann insbesondere das Ermitteln von bedingten Konfidenzen ermöglichen, die eine besonders zuverlässige Beurteilung der Richtigkeit einer Klassierung erlauben.

In einer weiteren bevorzugten Ausführungsform wird auf Grundlage der Klassierungen, die sich aus den wenigstens zwei Modellen für Anlagendaten aus einer zweiten Menge mehrerer zeitlicher Verläufe ergeben, eine Auswahl der Modelle in der Speichereinrichtung gespeichert. Klassieren beispielsweise zwei Modelle Anlagendaten aus mehreren zeitlichen Verläufen unabhängig davon, dass die Anlagendaten jeweils unterschiedlichen Zeitfenstern entstammen, im Wesentlichen gleich, so kann gegebenenfalls auf eines der Modelle verzichtet werden. Der Auswahl kann dabei eine statistische Grenze zugrunde gelegt werden, wonach wenigstens zwei unterschiedliche Modelle einen vorgegebenen Prozentsatz an verschiedenen zeitlichen Verläufen im Wesentlichen gleich klassieren müssen, damit eines der Modelle ausgewählt, gespeichert und damit zum Beispiel im Diagnoseverfahren gemäß dem ersten Aspekt der Erfindung angewendet wird. Die Speicherung und damit gegebenenfalls spätere Verwendung einer begrenzten Auswahl der zunächst gelernten Modelle kann vorteilhaft im Hinblick auf die benötigte Rechenleistung sein.

Die bisher gegebene Beschreibung bevorzugter Ausführungsformen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem Diagnoseverfahren gemäß dem ersten Aspekt der Erfindung, dem Diagnosesystem gemäß dem zweiten Aspekt der Erfindung und dem Trainingsverfahren gemäß dem dritten Aspekt der Erfindung kombinierbar.

Die voranstehend beschriebenen Eigenschaften, Merkmale und Vorteile der Erfindung sowie die Art und Weise, wie diese erreicht werden, werden klarer und deutlicher verständlich im Zusammenhang mit der folgenden Beschreibung von Ausführungsbeispielen der Erfindung, die im Zusammenhang mit den Figuren, in denen durchgängig dieselben Bezugszeichen für dieselben oder einander entsprechende Elemente der Erfindung verwendet werden, näher erläutert werden. Die Ausführungsbeispiele dienen der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale der Ausführungsbeispiele auch explizit isoliert betrachtet und mit einem beliebigen der Ansprüche kombiniert werden.

Es zeigen, zumindest teilweise schematisch:
- FIG 1: ein Beispiel eines zeitlichen Verlaufs von Anlagendaten, der in Zeitfenster unterteilt ist;
- FIG 2: ein Beispiel für ein Diagnoseverfahren;
- FIG 3: ein Beispiel für ein Diagnosesystem; und
- FIG 4: ein Beispiel für ein Trainingsverfahren.

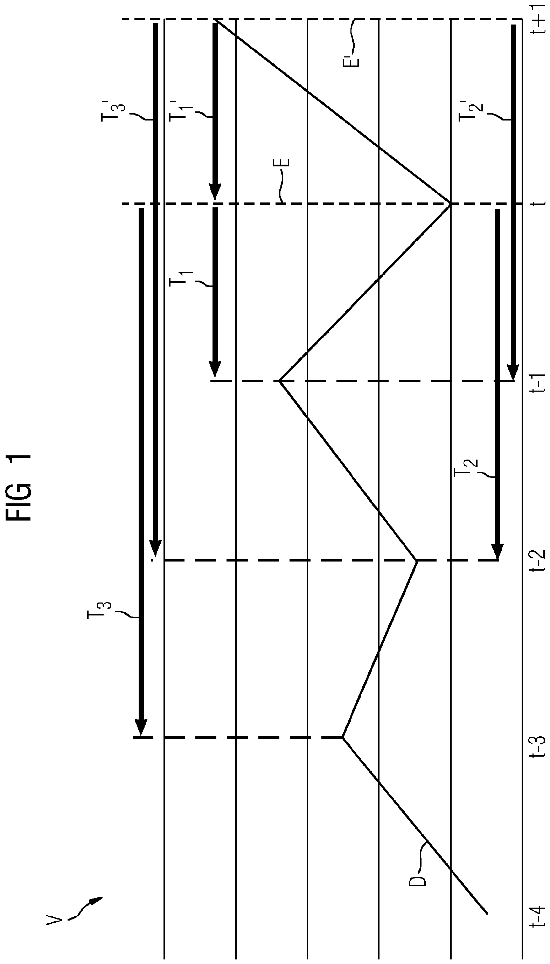

**Fig 1** zeigt ein Beispiel eines zeitlichen Verlaufs V von Anlagendaten D, der in Zeitfenster T₁, T₂, T₃ unterschiedlicher Länge unterteilt ist. Die Anlagendaten D entsprechen vorzugsweise zumindest einer Mess- und/oder Stellgröße einer verfahrenstechnischen Anlage, die über die Zeit aufgetragen ist. Die Anlagendaten D charakterisieren einen Zustand der Anlage, zum Beispiel einen Normalbetrieb oder einen von gegebenenfalls mehreren Fehlbetrieben. Der zeitliche Verlauf V der Anlagendaten D kann dabei charakteristisch für den Anlagenzustand, in dem sich die Anlage z. B. zum Zeitpunkt t befindet. Insbesondere kann der Verlauf V eine Dynamik charakterisieren, aufgrund der die Anlage von einem Anlagenzustand in einen anderen wechselt oder aber im selben Zustand verbleibt.

Der zeitliche Verlauf V der Anlagendaten D kann entsprechend dazu genutzt werden, mithilfe von Modellen eine Klassifizierung des Anlagenzustands vorzunehmen. Den Modellen wird dabei in bevorzugter Weise jeweils eines der Zeitfenster T₁, T₂, T₃ zugeordnet, d. h. durch die Modelle werden die Anlagendaten D innerhalb des jeweils zugeordneten Zeitfensters T₁, T₂, T₃ verarbeitet. Die Zeitfenster T₁, T₂, T₃ unterscheiden sich dabei im gezeigten Beispiel hinsichtlich ihrer zeitlichen Länge. Das erste Zeitfenster T₁ weist zum Beispiel eine Länge 1 auf, das zweite Zeitfenster T₂ eine Länge 2 und das dritte Zeitfenster T₃ eine Länge 3. Dadurch können die Modelle gegebenenfalls sensibel auf unterschiedliche Dynamiken im zeitlichen Verlauf V sein. Alternativ oder zusätzlich können sich die Zeitfenster T₁, T₂, T₃ aber auch bezüglich einer Metrik unterscheiden.

In einem kontinuierlichen Betrieb der Anlage werden die Zeitfenster T₁, T₂, T₃ vorzugsweise derart gewählt, dass sie alle bis an einen Endzeitpunkt E heranreichen. Der Endzeitpunkt E korrespondiert dabei in bevorzugter Weise mit der Gegenwart t, d. h. zum Endzeitpunkt E liegen, insbesondere gegenwärtig aktuelle, Anlagendaten D vor.

Wird die Anlage weiter betrieben, verschiebt sich entsprechend der mit der Gegenwart korrespondierende Endzeitpunkt E weiter, und somit auch die Zeitfenster T₁, T₂, T₃. Zum Zeitpunkt t+1 erstrecken sich die verschobenen Zeitfenster T₁', T₂', T₃' daher bis zum verschobenen Endzeitpunkt E'. Dadurch kann sichergestellt werden, dass der Diagnose der Anlage, insbesondere der Klassierung des gegenwärtigen Anlagenzustands, immer aktuelle Anlagendaten D zugrunde gelegt werden.

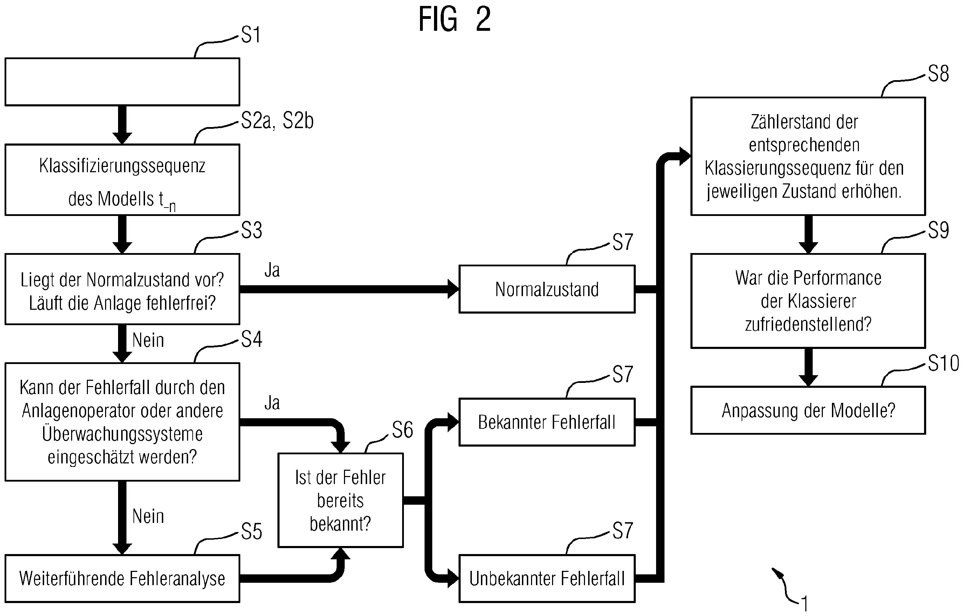

**FIG 2** zeigt ein Beispiel eines Diagnoseverfahrens 1 für eine verfahrenstechnische Anlage. In einem Verfahrensschritt S1 wird ein zeitlicher Verlauf von Anlagendaten, welche den Anlagenzustand zumindest teilweise charakterisieren, bereitgestellt (siehe FIG 1). In einem weiteren Verfahrensschritt S2a wird mithilfe von wenigstens zwei Modellen auf Grundlage des zeitlichen Verlaufs der Anlagendaten der Anlagenzustand klassiert. Dabei werden die Modelle vorzugsweise auf Zeitreihen angewendet, die durch sich unterscheidende Zeitfenster definiert sind und jeweils einen Ausschnitt aus dem bereitgestellten zeitlichen Verlauf der Anlagendaten enthalten. In einem weiteren Verfahrensschritt S2b kann den aus den wenigstens zwei Modellen erhaltenen Klassierungen jeweils eine Konfidenz zugeordnet werden, welche beispielsweise die Wahrscheinlichkeit angibt, mit der das entsprechende Modell den Anlagenzustand korrekt klassiert hat.

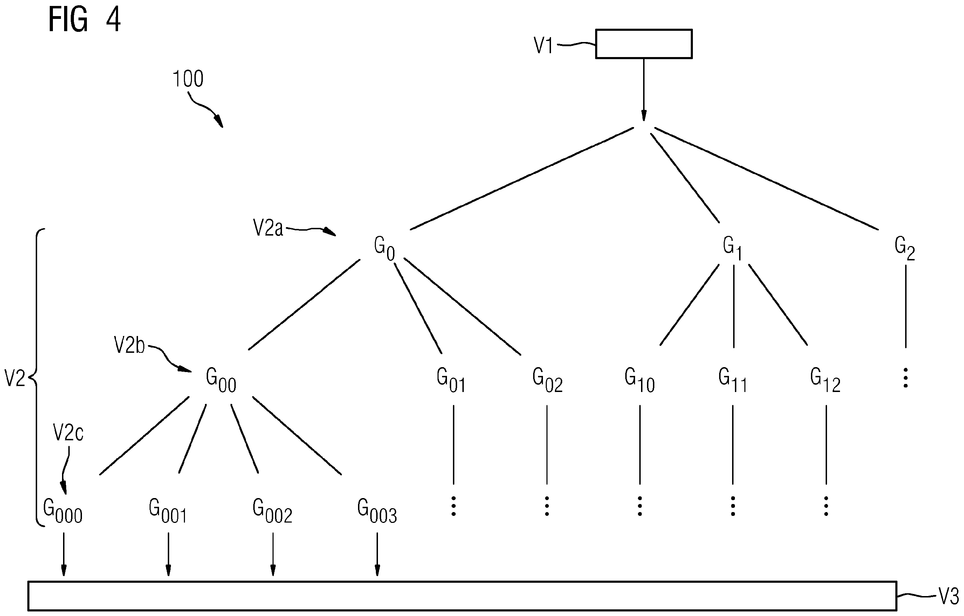

Vorzugsweise klassieren die Modelle den Anlagenzustand im Verfahrensschritt S2a dabei in einer vorgegebenen Reihenfolge, sodass sich eine Sequenz von Klassierungen ergibt. Auf Grundlage der sich ergebenden Sequenz kann dann in einem weiteren Verfahrensschritt S3 eine Gesamtklassierung ermittelt werden, welche mit einer besonders hohen Wahrscheinlichkeit den gegenwärtigen Anlagenzustand korrekt klassiert. Insbesondere kann der Gesamtklassierung bzw. der sich ergebenden Sequenz auch eine (Gesamt-)Konfidenz zugeordnet werden, welche beispielsweise ein Maß für die Wahrscheinlichkeit sein kann, dass der Anlagenzustand durch die Gesamtklassierung korrekt klassiert ist. Die Gesamtklassierung und/oder die ihr zugeordnete Konfidenz kann zum Beispiel in Trainingsläufen und/oder beim wiederholten Ausführen des Diagnoseverfahrens 1 durch eine statistische Auswertung aller bei den Trainingsläufen und/oder beim wiederholten Ausführen des Diagnoseverfahrens 1 erhaltenen Sequenzen ermittelt werden (siehe FIG 4).

Anhand der in Verfahrensschritt S3 ermittelten Gesamtklassierung kann dann beurteilt werden, ob ein Normalbetrieb vorliegt, d. h. die Anlage im Wesentlichen fehlerfrei läuft.

Liegt der Normalbetrieb vor, d. h. läuft die Anlage im Wesentlichen fehlerfrei, kann in einem weiteren Verfahrensschritt S7 eine entsprechende Diagnoseinformation ausgegeben werden. Die Diagnoseinformation enthält hierbei vorzugsweise die Gesamtklassierung sowie die ihr zugeordnete Konfidenz. Die Diagnoseinformation kann zum Beispiel an einen Anlagenbenutzer oder an ein Leitsystem der Anlage ausgegeben werden, welcher bzw. welches die Anlage auf Grundlage dieser Information weiter steuern kann.

Liegt dagegen ein Fehlbetrieb vor, d. h. läuft die Anlage fehlerhaft bzw. weicht der Anlagenzustand vom Normalbetrieb ab, kann in einem weiteren Verfahrensschritt S4 überprüft werden, ob der Fehlbetrieb durch den Anlagenbenutzer oder ein weiteres Überwachungssystem eingeschätzt werden kann. Beispielsweise kann geprüft werden, ob eine Ursache des Fehlbetriebs erkennbar ist und/oder welche Maßnahmen zu treffen sind, um den Fehlbetrieb abzuwenden bzw. die Anlage wieder in den Normalbetrieb zu überführen.

Ist dies nicht der Fall, kann in einem weiteren Verfahrensschritt S5 eine weiterführende Fehleranalyse durchgeführt werden, zum Beispiel um den Fehlbetrieb genauer zu charakterisieren.

In einem weiteren Verfahrensschritt S6 wird vorzugsweise geprüft, ob der Fehlbetrieb bereits bekannt ist. Insbesondere kann geprüft werden, ob der Fehlbetrieb bereits einmal aufgetreten ist. Dies kann insbesondere unabhängig von der Einschätzung des Fehlbetriebs im Verfahrensschritt S4 und/oder von der weiterführenden Fehleranalyse im Verfahrensschritt S5 durchgeführt werden.

Im Verfahrensschritt S7 wird dann vorzugsweise eine entsprechende Diagnoseinformation ausgegeben. Die Diagnoseinformation kann im Fall eines Fehlbetriebs neben der Gesamtklassierung sowie der ihr zugeordneten Konfidenz zusätzlich auch die in den Verfahrensschritten S4, S5 und/oder S6 ermittelte Information enthalten.

Es ist insbesondere möglich, dass anhand der in Verfahrensschritt S7 ausgegebenen Diagnoseinformation zwischen drei Fällen unterschieden wird: (i) es liegt der Normalbetrieb vor; (ii) es liegt ein bekannter Fehlbetrieb vor; und (iii) es liegt ein unbekannter Betrieb vor.

In einem weiteren Verfahrensschritt S8 kann, insbesondere auf Grundlage der in Verfahrensschritt S2a ermittelten Sequenz von Klassierungen, ein Datensatz, der zum Beispiel in einer Speichervorrichtung eines Leitsystems abgelegt ist, aktualisiert werden. Der Datensatz kann zum Beispiel Zählerstände enthalten, welche die Häufigkeit der aufgetretenen Sequenzen angeben. Entsprechend wird vorzugsweise der Zählerstand, der im Verfahrensschritt S2a ermittelten Sequenz, erhöht. In bevorzugter Weise wird dabei auch der, zum Beispiel durch den Anlagenbenutzer oder das weitere Überwachungssystem ermittelte tatsächliche Anlagenzustand, d. h. die korrekte Klassierung, im Datensatz vermerkt. Der derart aktualisierte Datensatz kann, wie im Zusammenhang mit FIG 4 näher beschrieben ist, dazu eingesetzt werden, die Zuverlässigkeit der Zuordnung von Gesamtklassierung zur Sequenz sowie der entsprechenden Konfidenz zu erhöhen, zum Beispiel indem der Inhalt des Datensatzes statistisch ausgewertet wird.

In einem weiteren Verfahrensschritt S9 kann beurteilt werden, ob die durch die Modelle in Verfahrensschritt S2a erfolgte Klassierung sowie die in Verfahrensschritt S2b erfolgte Konfidenzzuordnung zufriedenstellend ist. Beispielsweise kann geprüft werden, welche Modelle falsch klassifiziert haben und/oder ob solchen falschen Klassierungen ein hoher Konfidenzwert zugeordnet wurde. Ist dies der Fall, kann in einem weiteren Verfahrensschritt S10 eine Anpassung der Modelle bzw. der Konfidenzen vorgenommen werden.

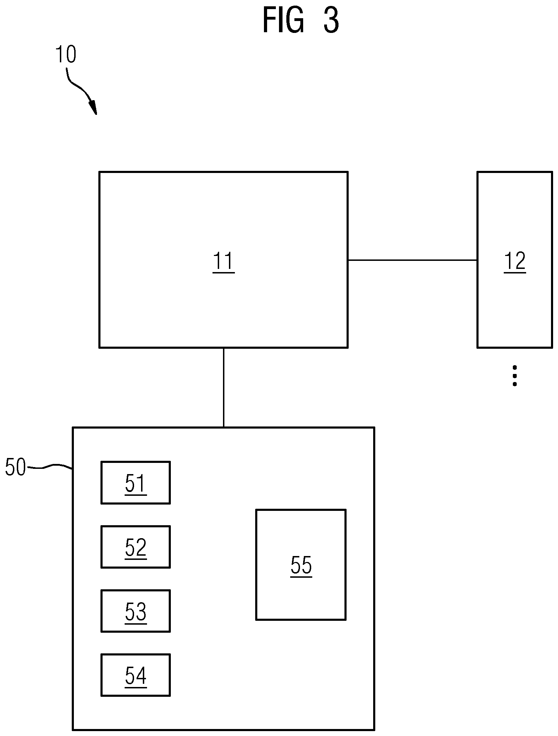

**FIG 3** zeigt ein Beispiel eines Diagnosesystems 50 für eine verfahrenstechnische Anlage 10, wobei das Diagnosesystem 50 dazu eingerichtet ist, ein Diagnoseverfahren, wie es zum Beispiel im Zusammenhang mit FIG 2 beschrieben ist, auszuführen. Die verfahrenstechnische Anlage 10 weist ein Leitsystem 11 und Anlagenkomponenten 12 auf, wobei das Leitsystem 11 und die Anlagenkomponenten 12 zum Beispiel über ein Netzwerk miteinander verbunden sind. Die Anlagenkomponenten 12 können Beispielsweise als Aktoren und/oder Sensoren ausgebildet sein, um einen Prozess der Anlage 10 zu steuern bzw. zu überwachen.

Das Diagnosesystem 50 weist vorzugsweise ein erstes Modul 51, ein zweites Modul 52, ein drittes Modul 53 und ein viertes Modul 54 sowie eine Speichervorrichtung 55 auf. Das erste Modul 51 ist in bevorzugter Weise dazu eingerichtet, einen zeitlichen Verlauf von Anlagendaten, welche einen Zustand der Anlage zumindest teilweise charakterisieren, bereitzustellen. Das erste Modul 51 kann zu diesem Zweck insbesondere dazu eingerichtet sein, im Betrieb der Anlage 10 auf von den Anlagenkomponenten 12 bereitgestellte Messgrößen und/oder vom Leitsystem 11 bereitgestellte Stellgrößen zuzugreifen.

Das zweite Modul 52 ist vorzugsweise dazu eingerichtet, den Anlagenzustand mithilfe von wenigstens zwei Modellen auf Grundlage des bereitgestellten zeitlichen Verlaufs der Anlagendaten zu klassieren. Dazu kann das zweite Modul 52 beispielsweise auf die Speichervorrichtung 55 zugreifen, in der die wenigstens zwei Modelle in bevorzugter Weise gespeichert sind. Die Modelle unterscheiden sich dabei vorzugsweise bezüglich eines Zeitfensters, aus dem die Anlagendaten des zeitlichen Verlaufs den Modellen zugrunde gelegt werden. Mit anderen Worten sind die Modelle dazu eingerichtet, unterschiedliche Zeitreihen der Anlagendaten aus dem bereitgestellten zeitlichen Verlauf zu verarbeiten.

Das dritte Modul 53 ist vorzugsweise dazu eingerichtet, den sich aus den wenigstens zwei Modellen ergebenden Klassierungen jeweils eine Konfidenz zuzuordnen. Die Konfidenzen können dabei beispielsweise eine Wahrscheinlichkeit angeben, mit der die vom zweiten Modul 52 ermittelte Klassierung zutrifft. Die Konfidenzen können ebenfalls in der Speichervorrichtung 55 gespeichert sein.

Das vierte Modul 54 ist vorzugsweise dazu eingerichtet, eine auf den Klassierungen des Anlagenzustands und den ihnen zugeordneten Konfidenzen basierende Diagnoseinformation auszugeben. Das vierte Modul 54 kann zu diesem Zweck beispielsweise als Schnittstelle ausgebildet sein, über welche die Diagnoseinformation etwa an einen Anlagenbenutzer ausgegeben werden kann.

Das erste, zweite und dritte Modul 51, 52, 53 können hardund/oder softwaretechnisch ausgebildet sein. Insbesondere können das erste, zweite und dritte Modul 51, 52, 53 eine, vorzugsweise mit einem Speicher- und/oder Bussystem daten- bzw. signalverbundene, insbesondere digitale, Verarbeitungseinheit, insbesondere Mikroprozessoreinheit (CPU), oder ein Modul einer solchen und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, so dass die CPU die Schritte solcher Verfahren ausführen kann.

Dabei ist es auch denkbar, dass in der Speichervorrichtung 55 nicht nur die wenigstens zwei Modelle und die Konfidenz gespeichert sind, sondern auch die vom ersten Modul 51 bereitgestellten Anlagendaten. Das erste Modul 51 kann insbesondere dazu eingerichtet sein, die bereitgestellten Anlagendaten im Wesentlichen kontinuierlich, d. h. im Wesentlichen in Echtzeit während des Betriebs der Anlage 10, in einen Speicher der Speichervorrichtung 55 zu schreiben. Dadurch kann das Diagnosesystem 50 das Diagnoseverfahren ebenfalls in Echtzeit ausführen.

**FIG 4** zeigt ein Beispiel eines Trainingsverfahrens 100 für ein Diagnosesystem, wie es zum Beispiel im Zusammenhang mit FIG 3 gezeigt ist. In einem Verfahrensschritt V1 werden wenigstens zwei Modelle auf Grundlage einer ersten Menge mehrerer zeitlicher Verläufe von Anlagendaten durch maschinelles Lernen ermittelt. Die Anlagendaten eines einzelnen zeitlichen Verlaufs charakterisieren dabei in bevorzugter Weise den Zustand einer verfahrenstechnischen Anlage zumindest teilweise. Dem maschinellen Lernen wird zudem Information bezüglich eben jener mit den mehreren zeitlichen Verläufen korrespondierenden Anlagenzuständen zugrunde gelegt. Mit anderen Worten wird zum Lernen Information bereitgestellt, welcher Anlagenzustand durch die Anlagendaten eines einzelnen zeitlichen Verlaufs aus der ersten Menge tatsächlich charakterisiert ist bzw. welches die korrekte oder wahre Klassierung des Anlagenzustands ist.

Jeder einzelne zeitliche Verlauf aus der ersten Menge wird vorzugsweise in wenigstens zwei zeitliche Abschnitte unterteilt, die unterschiedlichen Zeitfenstern entsprechen, wobei sich die Zeitfenster auch überlappen können. Jedes der wenigstens zwei Zeitfenster definiert damit eine Zeitreihe. Auf der Grundlage mehrerer solcher, durch jeweils das gleiche Zeitfenster definierter Zeitreihen aus unterschiedlichen zeitlichen Verläufen sowie der Information bezüglich der korrespondierenden Anlagenzustände wird dann jeweils eines der Modelle gelernt, zum Beispiel indem ein Muster in diesen Zeitreihen ermittelt wird.

Vorzugsweise werden die wenigstens zwei gelernten Modelle in einem weiteren Verfahrensschritt V2 auf Anlagendaten aus einer zweiten Menge von zeitlichen Verläufen angewandt. Dabei können die Klassierungen mithilfe der Modelle in einer vorgegebenen Reihenfolge ausgeführt werden. Dabei können sich unterschiedliche Sequenzen von Klassierungen ergeben. Die Anzahl an auftretenden Sequenzen kann in einer Speichervorrichtung, etwa in Form eines Datensatzes, gespeichert werden.

In einem ersten Unterschritt V2a werden zum Beispiel einem ersten Modell die Anlagendaten aus einem ersten Zeitfenster innerhalb der zeitlichen Verläufe aus der zweiten Menge zugrunde gelegt. In FIG 4 ist beispielhaft eine Menge Gᵥ für drei dabei mögliche Klassierungen dargestellt. Der Index v kann beispielsweise die Werte 0, 1 oder 2 annehmen, wobei die Menge G₀ etwa die Anzahl der Klassierungen als den Normalbetrieb N, die Menge G₁ die Anzahl der Klassierungen als einen ersten Fehlbetrieb F1 und die Menge G₂ die Anzahl der Klassierungen als einen zweiten Fehlbetrieb F2 angibt.

In einem zweiten Unterschritt V2b können dann einem zweiten Modell die Anlagendaten aus einem zweiten Zeitfenster innerhalb der zeitlichen Verläufe aus der zweiten Menge zugrunde gelegt werden. Im vorliegenden Beispiel wird davon ausgegangen, dass auch das zweite Modell wieder den Normalbetrieb N, den ersten Fehlbetrieb F1 oder den zweiten Fehlbetrieb F2 klassieren kann. Unter Berücksichtigung der Klassierungen des ersten Modells ergeben sich Mengen G_{vw} für neun mögliche Sequenzen, wobei die Indices vw wieder jeweils die Werte 0, 1 oder 2 annehmen können. Die Menge G₀₀ gibt somit beispielsweise die Anzahl der Klassierungen als Normalbetrieb durch beide Modelle an, während die Menge G₁₂ die Anzahl der Klassierungen als ersten Fehlbetrieb F1 durch das erste Modell und als zweiten Fehlbetrieb F2 durch das zweite Modell angibt.

In einem weiteren Unterschritt V2c werden die Sequenzen noch um eine Information bezüglich des mit den jeweiligen zeitlichen Verläufen korrespondierenden Anlagenzustands ergänzt. Die Menge G₀₀₂ repräsentiert beispielsweise die Anzahl der Fälle, in denen das erste und zweite Modell jeweils den Normalbetrieb N klassiert haben, während die zugrunde gelegten Anlagendaten aus dem zeitlichen Verlauf eigentlich mit dem zweiten Fehlbetrieb F2 korrespondieren.

Hierbei ist auch eine zusätzliche Menge G₀₀₃ aufgeführt, welche den Fall unbekannter Zeitreihen repräsentiert. Korrespondiert die betrachtete Zeitreihe mit einem unbekannten Anlagenzustand, so wird sie der Menge G₀₀₃ zugerechnet. Nicht dargestellt ist der Fall, dass auch die Modelle eine Zeitreihe als unbekannt klassieren können. Es ist jedoch denkbar, in diesem Fall auch weitere Werte für die Indices vwx zuzulassen, so dass z. B. eine Menge G₃₀₃ gebildet werden kann.

In einem weiteren Verfahrensschritt V3 werden die in dem unterschritt V2c erhaltenen Mengen G_{VWX} statistisch ausgewertet, um eine Konfidenz für die für die verschiedenen möglichen Klassierungen durch die wenigstens zwei Modelle zu erhalten.

Beispielsweise werden alle Mengen G_{VWX} zusammengezählt, in denen die Klassierung durch das erste Modell zutrifft, und durch die Gesamtzahl aller zeitlichen Verläufe aus der ersten Menge dividiert. Wird insgesamt beispielsweise hundertmal die Sequenz 000, zwölfmal die Sequenz 011 und dreimal die Sequenz 001 gezählt, ergibt sich eine Wahrscheinlichkeit von 100/115, dass die Klassierung durch das erste Modell zutrifft.

Die Konfidenzen für Klassierungen durch das zweite und gegebenenfalls weitere Modelle können dabei auch bedingte Konfidenzen darstellen, in denen die bereits erfolgte bzw. vorangehende Klassierung durch wenigstens ein anderes Modell berücksichtigt wird. Klassifiziert das erste Modell den Anlagenzustand beispielsweise als Normalbetrieb N, können bei der Ermittlung der Konfidenz für die Klassifizierung durch das zweite Modell alle Mengen G_{vwx}, in denen die Klassierungen durch das erste und zweite Modell zutreffen, zusammengezählt und durch die Gesamtzahl aller Fälle, in denen die Klassierung durch das erste Modell zutrifft, dividiert werden.

### Bezugszeichenliste

- 1: Diagnoseverfahren
- S1-10: Verfahrensschritte

- 10: Anlage
- 11: Leitsystem
- 12: Anlagenkomponenten

- 50: Diagnosesystem
- 51: erstes Modul
- 52: zweites Modul
- 53: drittes Modul
- 54: viertes Modul
- 55: Speichervorrichtung

- 100: Trainingsverfahren
- V1-V3: Verfahrensschritte
- V2a, V2b: Unterschritte

- V: zeitlicher Verlauf
- D: Anlagendaten
- T₁, T₂, T₃: Zeitfenster
- T₁', T₂', T₃': zeitlich verschobene Zeitfenster
- E: Endzeitpunkt
- E': zeitlich verschobener Endzeitpunkt
- t: Zeitpunkt

- G_{vwx}: Menge

## Patentansprüche

1. Diagnoseverfahren (1) für eine verfahrenstechnische Anlage (10), aufweisend die Schritte:
- (S1) Bereitstellen eines zeitlichen Verlaufs (V) von Anlagendaten (D), welche den Anlagenzustand zumindest teilweise charakterisieren;
und durch folgende Schritte gekennzeichnet:
- (S2a) Klassieren eines Anlagenzustands mithilfe von wenigstens zwei Modellen auf Grundlage des zeitlichen Verlaufs (V) der Anlagendaten (D), wobei sich die Modelle bezüglich eines Zeitfensters (T₁, T₂, T₃), aus dem die Anlagendaten (D) zugrunde gelegt werden, unterscheiden;
- (S2b) Zuordnen jeweils einer Konfidenz zu den Klassierungen, die sich aus den wenigstens zwei Modellen ergeben; und
- (S7) Ausgeben einer Diagnoseinformation, die auf den Klassierungen des Anlagenzustands und den ihnen zugeordneten Konfidenzen basiert.

2. Diagnoseverfahren (1) nach einem der vorangehenden Ansprüche,
**dadurch gekennzeichnet,**
**dass** sich die Zeitfenster (T₁, T₂, T₃) bezüglich ihrer zeitlichen Länge unterscheiden.

3. Diagnoseverfahren (1) nach Anspruch 2,
**dadurch gekennzeichnet,**
**dass** die zeitlichen Längen der Zeitfenster (T₁, T₂, T₃) logarithmisch verteilt sind.

4. Diagnoseverfahren (1) nach einem der vorangehenden Ansprüche,
**dadurch gekennzeichnet ,**
**dass** sich die Zeitfenster (T₁, T₂, T₃) bezüglich einer Metrik unterscheiden.

5. Diagnoseverfahren (1) nach einem der vorangehenden Ansprüche,
**dadurch gekennzeichnet,**
**dass** wenigstens eines der Zeitfenster (T₁, T₂, T₃) eine logarithmische Metrik aufweist.

6. Diagnoseverfahren (1) nach einem der vorangehenden Ansprüche,
**dadurch gekennzeichnet,**
**dass** zeitlich logarithmisch beabstandete Anlagendaten (D) als zeitlicher Verlauf (V) bereitgestellt werden.

7. Diagnoseverfahren (1) nach einem der vorangehenden Ansprüche,
**dadurch gekennzeichnet,**
**dass** ein den Anlagenzustand betreffendes Eingangssignal erfasst und einer Anpassung der Konfidenzen zugrunde gelegt wird.

8. Diagnoseverfahren (1) nach einem der vorangehenden Ansprüche,
**dadurch gekennzeichnet,**
**dass** ein den Anlagenzustand betreffendes Eingangssignal erfasst und einer Anpassung von zumindest einem der wenigstens zwei Modelle zugrunde gelegt wird.

9. Diagnoseverfahren (1) nach einem der vorangehenden Ansprüche,
**dadurch gekennzeichnet,**
**dass** auf Grundlage von wenigstens einer Klassierung eine Zustandsanalyse der technischen Anlage (10) vorgenommen wird.

10. Diagnoseverfahren (1) nach einem der vorangehenden Ansprüche,
**dadurch gekennzeichnet,**
**dass** die Diagnoseinformation eine Gesamtklassierung des Anlagenzustands umfasst, wobei die Gesamtklassierung auf Grundlage der Klassierungen, die sich aus den wenigstens zwei Modellen ergeben, und den ihnen zugeordneten Konfidenzen ermittelt wird.

11. Diagnoseverfahren (1) nach Anspruch 10,
**dadurch gekennzeichnet,**
**dass** die Gesamtklassierung in Abhängigkeit einer Sequenz aus Klassierungen ermittelt wird.

12. Diagnosesystem (50) für eine verfahrenstechnische Anlage (10), das zur Ausführung eines Diagnoseverfahrens (1) nach einem der vorangehenden Ansprüche eingerichtet ist und eine Speichereinrichtung (55) aufweist, in der die wenigstens zwei Modelle und die den Klassierungen zuzuordnenden Konfidenzen gespeichert sind.

13. Trainingsverfahren (100) für ein Diagnosesystem (50) nach Anspruch 12, wobei (V1) die wenigstens zwei Modelle durch maschinelles Lernen ermittelt werden, wobei dem maschinellen Lernen die Anlagendaten einer ersten Menge mehrerer zeitlicher Verläufe (V) aus wenigstens zwei unterschiedlichen Zeitfenstern (T₁, T₂, T₃) sowie Information bezüglich der mit den mehreren zeitlichen Verläufen (V) korrespondierenden Anlagenzustände zugrunde gelegt werden.

14. Trainingsverfahren (100) nach Anspruch 13,
**dadurch gekennzeichnet,**
**dass** die Konfidenzen auf Grundlage einer statistischen Auswertung der Klassierungen, die sich gemäß der wenigstens zwei Modelle für Anlagendaten (D) aus einer zweiten Menge mehrerer zeitlicher Verläufe (V) ergeben, ermittelt werden.

15. Trainingsverfahren (100) nach einem der Ansprüche 13 oder 14,
**dadurch gekennzeichnet ,**
**dass** auf Grundlage der Klassierungen, die sich aus den wenigstens zwei Modellen für Anlagendaten (D) aus einer zweiten Menge mehrerer zeitlicher Verläufe (V) ergeben, eine Auswahl der Modelle in der Speichereinrichtung (55) gespeichert wird.

## Claims

1. Diagnosis method (1) for a process-engineering plant (10), having the following steps:
- (S1) providing a course over time (V) of plant data (D), which at least partially characterises the plant status;
and **characterised by** the following steps:
- (S2a) classification of a plant status with the aid of at least two models on the basis of the course over time (V) of the plant data (D), wherein the models differ in respect of a time window (T₁, T₂, T₃), from which the plant data (D) are based;
- (S2b) allocating in each case one confidence to the classifications, which result from the at least two models; and
- (S7) outputting diagnosis information, which is based on the classifications of the plant status and the confidences allocated thereto.

2. Diagnosis method (1) according to one of the preceding claims,
**characterised in that**
the time windows (T₁, T₂, T₃) differ in respect of their length of time.

3. Diagnosis method (1) according to claim 2,
**characterised in that**
the lengths of time of the time windows (T₁, T₂, T₃) are logarithmically distributed.

4. Diagnosis method (1) according to one of the preceding claims,
**characterised in that**
the time windows (T₁, T₂, T₃) differ in respect of metrics.

5. Diagnosis method (1) according to one of the preceding claims,
**characterised in that**
at least one of the time windows (T₁, T₂, T₃) has logarithmic metrics.

6. Diagnosis method (1) according to one of the preceding claims,
**characterised in that**
temporally logarithmically spaced-apart plant data (D) is provided as the course over time (V).

7. Diagnosis method (1) according to one of the preceding claims,
**characterised in that**
an input signal relating to the plant status is detected and forms the basis for an adjustment of the confidences.

8. Diagnosis method (1) according to one of the preceding claims,
**characterised in that**
an input signal relating to the plant status is detected and forms the basis for an adjustment of at least one of the at least two models.

9. Diagnosis method (1) according to one of the preceding claims,
**characterised in that**
a status analysis of the engineering plant (10) is made on the basis of at least one classification.

10. Diagnosis method (1) according to one of the preceding claims,
**characterised in that**
the diagnosis information comprises an overall classification of the plant status, wherein the overall classification is determined on the basis of the classifications, which result from the at least two models, and the confidences allocated thereto.

11. Diagnosis method (1) according to claim 10,
**characterised in that**
the overall classification is determined as a function of a sequence of classifications.

12. Diagnosis system (50) for a process-engineering plant (10), which is adapted to carry out a diagnosis method (1) according to one of the preceding claims and has a storage device (55) in which the at least two models and the confidences to be allocated to the classifications are stored.

13. Training method (100) for a diagnosis system (50) according to claim 12, wherein (VI) the at least two models are determined by machine learning, wherein the plant data of a first quantity of a plurality of courses over time (V) from at least two different time windows (T₁, T₂, T₃) and information in respect of the plant statuses corresponding with the plurality of courses over time (V) form the basis of machine learning.

14. Training method (100) according to claim 13,
**characterised in that**
the confidences are determined on the basis of a statistical evaluation of the classifications, which result according to the at least two models for plant data (D) from a second quantity of a plurality of courses over time (V) .

15. Training method (100) according to one of claims 13 or 14,
**characterised in that**
a selection of the models is stored in the storage device (55) on the basis of the classifications, which result from the at least two models for plant data (D) from a second quantity of a plurality of courses over time (V).

## Revendications

1. Procédé (1) de diagnostic pour une installation (10) de technique industrielle comportant les stades :
- (S1) mise à disposition d'une courbe (V) en fonction du temps de données (D) de l'installation, qui caractérise au moins en partie l'état de l'installation ; et **caractérisé par** les stades suivants ;
- (S2a) classement d'un état de l'installation à l'aide d'au moins deux modèles sur la base de la courbe (V) en fonction du temps des données (D) de l'installation, les modèles se distinguant en ce qui concerne un créneau (T₁, T₂, T₃) temporel sur lequel reposent les données (D) d'installation ;
- (S2b) association respectivement d'une confiance aux classements qui proviennent des au moins deux modèles et
- (S7) émission d'une information de diagnostic, qui repose sur les classements de l'état de l'installation et des confiances qui leur sont associées.

2. Procédé (1) de diagnostic suivant l'une des revendications précédentes,
**caractérisé**
**en ce que** les créneaux (T₁, T₂, T₃) temporels se distinguent en ce qui concerne leur longueur dans le temps.

3. Procédé (1) de diagnostic suivant la revendication 2, **caractérisé**
**en ce que** les longueurs dans le temps des créneaux (T₁, T₂, T₃) temporels sont répartis logarithmiquement.

4. Procédé (1) de diagnostic suivant l'une des revendications précédentes,
**caractérisé**
**en ce que** les créneaux (T₁, T₂, T₃) temporels se distinguent en ce qui concerne une métrique.

5. Procédé (1) de diagnostic suivant l'une des revendications précédentes,
**caractérisé**
**en ce qu'**en au moins l'un des créneaux (T₁, T₂, T₃) temporels a une métrique logarithmique.

6. Procédé (1) de diagnostic suivant l'une des revendications précédentes,
**caractérisé**
**en ce que** l'on met à disposition comme courbe (V) en fonction du temps des données (D) de l'installation à distance logarithmiquement dans le temps.

7. Procédé (1) de diagnostic suivant l'une des revendications précédentes,
**caractérisé**
**en ce que** l'on détecte un signal d'entrée concernant l'état de l'installation et on le prend pour base pour une adaptation de la confiance.

8. Procédé (1) de diagnostic suivant l'une des revendications précédentes,
**caractérisé**
**en ce que** l'on détecte un signal d'entrée concernant l'état de l'installation et on le prend pour base pour une adaptation d'au moins l'un des au moins deux modèles.

9. Procédé (1) de diagnostic suivant l'une des revendications précédentes,
**caractérisé**
**en ce que** sur la base d'au moins un classement, on effectue une analyse d'état de l'installation (10) technique.

10. Procédé (1) de diagnostic suivant l'une des revendications précédentes,
**caractérisé**
**en ce que** l'information de diagnostic comprend un classement d'ensemble de l'état de l'installation, le classement d'ensemble étant déterminé sur la base des classements qui proviennent des au moins deux modèles et des confiances qui leur sont associées.

11. Procédé (1) de diagnostic suivant la revendication 10, **caractérisé**
**en ce que** on détermine le classement d'ensemble en fonction d'une séquence de classements.

12. Système (50) de diagnostic pour une installation (10) à la technique industrielle, qui est conçue pour effectuer un procédé (1) de diagnostic suivant l'une des revendications précédentes et qui a un dispositif (55) de mise en mémoire, dans lequel les au moins deux modèles et les confiances associées au classement sont mis en mémoire.

13. Procédé (100) d'apprentissage d'un système (50) de diagnostic suivant la revendication 12, dans lequel (V1) on détermine les au moins deux modèles par apprentissage automatique, dans lequel on prend pour base, à l'apprentissage automatique, les données de l'installation d'un premier ensemble de plusieurs courbes (V) en fonction du temps composé d'au moins deux créneaux (T₁, T₂, T₃) temporels différents ainsi que de l'information se rapportant aux états de l'installation correspondant aux plusieurs courbes (V) en fonction du temps.

14. Procédé (100) d'apprentissage suivant la revendication 13, **caractérisé**
**en ce que** l'on détermine les confiances sur la base d'une évaluation statistique des classements qui proviennent, suivant les au moins deux modèles pour les données de l'installation, d'un deuxième ensemble de plusieurs courbes (V) en fonction du temps.

15. Procédé (100) d'apprentissage suivant l'une des revendications 13 ou 14,
**caractérisé**
**en ce que** sur la base des classements, qui proviennent des au moins deux modèles pour les données (D) d'installation, à partir d'un deuxième ensemble de plusieurs courbes (V) en fonction du temps, on met en mémoire une sélection des modèles dans le dispositif (55) de mise en mémoire.
